# EUROPÄISCHE PATENTSCHRIFT

(11) **EP 2 888 139 B1**
(45) Veröffentlichungstag und Bekanntmachung des Hinweises auf die Patenterteilung: **14.09.2016**
(21) Anmeldenummer: 13736535.9
(22) Anmeldetag: 09.07.2013
(51) Int. Cl.: B60W 30/095, B60W 50/14, B60T 7/22, B62D 15/02, B60W 30/18

(54) **FAHRERASSISTENZSYSTEM UND VERFAHREN ZUM BETREIBEN DES FAHRERASSISTENZSYSTEMS**
DRIVER ASSISTANCE SYSTEM, AND METHOD FOR OPERATING SAID DRIVER ASSISTANCE SYSTEM
SYSTÈME D'AIDE À LA CONDUITE ET PROCÉDÉ POUR FAIRE FONCTIONNER LE SYSTÈME D'AIDE À LA CONDUITE

(30) Priorität: 24.08.2012 DE 102012215093
(43) Veröffentlichungstag der Anmeldung: 01.07.2015
(73) Patentinhaber: Robert Bosch GmbH, 70442 Stuttgart (DE)
(72) Erfinder: BUERKLE, Lutz, 70199 Stuttgart (DE); JORDAN, Ruediger, 70176 Stuttgart (DE)
(86) Internationale Anmeldenummer: PCT/EP2013/064431
(87) Internationale Veröffentlichungsnummer: WO 2014/029549

(56) Entgegenhaltungen:
- EP-A1- 1 977 946
- EP-A2- 1 475 765

## Beschreibung

Fahrerassistenzsysteme werden eingesetzt, um den Fahrer bzw. Benutzer eines Fahrzeugs in verschiedenen Verkehrssituationen zu unterstützen. So können Fahrerassistenzsysteme den Fahrer beispielsweise vor drohenden Kollisionen warnen oder eine automatische Bremsung durchführen, wenn eine solche gefährliche Verkehrssituation erkannt wurde. Dabei werden bei diesen Kollisionswarnsystemen im Wesentlichen Fahrzeuge bzw. Objekte berücksichtigt, die entweder auf der Fahrbahn stehen oder sich auf der Fahrbahn in gleicher Richtung wie das eigene Fahrzeug bewegen. Die bekannten Fahrerassistenzsysteme können bereits auch den Gegenverkehr berücksichtigen. Dies ist beispielsweise bei dem so genannten Linksabbiegeassistent der Fall, welcher eine automatische Notbremsung durchführt, wenn beim Linksabbiegen eine akute Kollisionsgefahr mit einem entgegenkommenden Fahrzeug ermittelt wird. Hingegen warnt ein Überholassistent den Fahrer, wenn bei einem Überholmanöver eine Kollisionsgefahr mit dem Gegenverkehr besteht. Auch dieses System führt schließlich eine automatische Bremsung durch, wenn der Fahrer das gefährliche Überholmanöver nicht abbricht.

Aus der EP 1 475 765 A2 ist eine Vorrichtung zur Bestimmung einer Durchfahrtsmöglichkeit für ein Fahrzeug an Hindernissen vorgeschlagen, die dazu dient, abzuschätzen, ob ein Fahrzeug bezüglich seiner Fahrzeughöhe bzw. seiner Fahrzeugbreite zwischen Hindernissen hindurchfahren kann.

Bei den warnenden Fahrerassistenzfunktionen besteht ein grundsätzliches Problem darin, die besagten Warnungen nur dann durchzuführen, wenn der Fahrer tatsächlich Unterstützung benötigt. Denn allzu häufige Warnungen können den Fahrer irritieren und schließlich zu einem Abschalten des Systems durch Benutzereingriff führen. Auch ein Fahrerassistenzsystem, welches in Fällen, in denen der Fahrzeugführer eine Unterstützung benötigt, solche Warnungen zu selten ausgibt, führt zu entsprechenden Irritationen des Fahrzeugführers.

Typischerweise stellt die Voraussage der Bewegung des eigenen und eines fremden Fahrzeugs über mehrere Sekunden hinweg eine sehr große Herausforderung für ein Fahrerassistenzsystem dar. Ist die Vorhersage nicht zutreffend, so wird die Fahrsituation falsch eingesetzt und infolge dessen eine falsche Systemreaktion durchgeführt bzw. fälschlicherweise nicht durchgeführt (False-Positive bzw. False-Negative). Die bisher zur Vorhersage der Fahrzeug-Bewegungen verwendeten Konzepte stützen sich auf einfache Bewegungsmodelle, wie z. B. Fahrzeug bewegt sich geradlinig oder auf einer Kreisbahn mit konstanter Geschwindigkeit oder Beschleunigung, welche unter Umständen keine genaue Vorhersage der Verkehrssituation ermöglichen und daher relativ häufig zu falschen Systemreaktionen führen. Dies kann insbesondere bei Vorliegen von Fahrbahnverengung und Gegenverkehr zu ungewollten Systemreaktionen führen.

Es ist daher Aufgabe der Erfindung, die Vorhersagbarkeit möglicher Kollisionen bei Fahrzeugen zu verbessern, welche sich auf Fahrbahnen mit Engstellen und Gegenverkehr bewegen. Diese Aufgabe wird durch ein Verfahren zum Betreiben eines Fahrerassistenzsystems gemäß Anspruch 1 sowie durch ein Fahrerassistenzsystem gemäß Anspruch 10 gelöst. Weitere vorteilhafte Ausführungsformen sind in den untergeordneten Ansprüchen angegeben.

Bei dem erfindungsgemäßen Verfahren zum Betreiben eines Fahrerassistenzsystems für ein auf einer Fahrbahn fahrendes Fahrzeug werden in einem ersten Schritt eine vor dem Fahrzeug liegende Fahrbahnengstelle sowie wenigstens ein dem Fahrzeug entgegenkommendes Gegenverkehr-Fahrzeug erfasst. Anschließend wird die Distanz und die Breite der Fahrbahnengstelle sowie die Distanz, die Breite, die aktuelle Fahrgeschwindigkeit und die aktuelle Fahrtrichtung des Gegenverkehrs-Fahrzeugs bestimmt. Anhand dieser Daten werden die voraussichtlichen Trajektorien des Fahrzeugs und des Gegenverkehr-Fahrzeugs prädikiert bzw. berechnet und ein voraussichtlicher Treffpunkt der beiden Fahrzeuge bestimmt. Anschließend wird die prognostizierte Verfahrenssituation bewertet und eine Sicherheitseinrichtung aktiviert, wenn der voraussichtliche Treffpunkt der beiden Fahrzeuge im Bereich der Fahrbahnengstelle liegt, wobei der Zeitpunkt der Aktivierung der Sicherheitseinrichtung in Abhängigkeit von der aktuellen Verkehrssituation bestimmt wird. Die Prognose bzw. Prädiktion der voraussichtlichen Trajektorien der beiden Fahrzeuge und die darauf folgende Bestimmung ihres voraussichtlichen Treffpunkts, erlaubt eine Aussage über die Kollisionsgefahr dieser Fahrzeuge im Bereich der Fahrbahnengstelle. Beim Erkennen einer Kollisionsgefahr können entsprechende Sicherheitsmaßnahmen, wie z. B. die Ausgabe einer Warnung oder der Eingriff in die Fahrzeugführung automatisch durchgeführt werden. Dabei erlaubt die variable Bestimmung des Zeitpunkts der Aktivierung der Sicherheitseinrichtung die Anzahl fehlerhafter Warnmeldungen bzw. Eingriffe in die Fahrzeugführung zu reduzieren.

In einer Ausführungsform ist vorgesehen, dass die Aktivierung der Sicherheitseinrichtung zeitlich verzögert wird, wenn die Fahrbahnengstelle durch ein einer Fahrspur des Gegenverkehr-Fahrzeugs zugeordnetes Hindernis bedingt ist. Hierbei wird berücksichtigt, dass der Gegenverkehr beim Annähren an das auf seiner Fahrspur befindliche Hindernis üblicherweise entsprechende Sicherheitsmaßnahmen zur Vermeidung einer Kollision der beiden Fahrzeuge im Bereich der Fahrbahnengstelle durchführt. Daher kann die Aktivierung der Sicherheitseinrichtung im eigenen Fahrzeug zunächst aufgeschoben werden, bis eine erneute Überprüfung der Verkehrssituation ergibt, dass das Gegenverkehr-Fahrzeug nicht, nicht ausreichend oder zu spät reagiert, um eine Kollision der Fahrzeuge im Bereich der Fahrbahnengstelle sicher zu vermeiden. Stellt das Fahrerassistenzsystem des Fahrzeugs nach der Verzögerung der Aktivierung der Sicherheitseinrichtung jedoch fest, dass das Gegenverkehrfahrzeug zur Kollisionsvermeidung entsprechende Maßnahmen, wie z. B. Abbremsen oder Beschleunigen, durchführt, kann die Aktivierung der Sicherheitseinrichtung vollständig unterdrückt werden. In diesem Fall werden als unnötig zu bewertende Systemreaktionen vermieden.

Gemäß einer weiteren Ausführungsform ist vorgesehen, dass die Aktivierung der Sicherheitseinrichtung zeitlich verzögert wird, wenn die Engstelle durch ein Hindernis bedingt ist, welches weder einer Fahrspur des Fahrzeugs noch einer Fahrspur des Gegenverkehr-Fahrzeugs eindeutig zugeordnet werden kann. Auch in diesem Fall kann davon ausgegangen werden, dass das Gegenverkehr-Fahrzeug durch eine entsprechende Maßnahme eine mögliche Fahrzeugkollision im Bereich der Fahrbahnengstelle vermeidet. Daher kann die frühe Aktivierung der Sicherheitseinrichtung verzögert bzw. zeitlich aufgeschoben werden bis in einem späteren Zeitpunkt Klarheit über das Verhalten des Gegenverkehr-Fahrzeugs und die gegebenenfalls notwendige eigenen Reaktion gewonnen wurde. Somit lassen sich unnötige Systemreaktionen, welche zu Irritationen bzw. Störung des Fahrzeugführers führen können, wirkungsvoll vermeiden.

In einer weiteren Ausführungsform ist vorgesehen, dass die Sicherheitseinrichtung unverzüglich aktiviert wird, wenn die Engstelle durch ein Hindernis auf einer dem Fahrzeug zugeordneten Fahrspur bedingt ist. Das frühe Aktivieren der Sicherheitseinrichtung ermöglicht eine möglichst schnelle Reaktion des eigenen Fahrzeugs und reduziert somit die Gefahr einer Kollision im Bereich der Fahrbahnengstelle.

Eine weitere Ausführungsform sieht vor, dass die Sicherheitsmaßnahme nicht durchgeführt bzw. die Sicherheitseinrichtung nicht aktiviert wird, wenn die ermittelte Fahrbahnbreite im Bereich der Verengung eine Mindestbreite überschreitet, welche durch die Summe der Breiten der beiden Fahrzeuge und einem zusätzlichen Sicherheitsabstand bestimmt wird. Durch die Überprüfung der Mindestbreite wird sichergestellt, dass keine unnötigen Sicherheitsmaßnahmen durchgeführt bzw. keine unnötigen Aktivierungen der Sicherheitseinrichtungen erfolgen, wenn die Fahrbahnengstelle mit komfortabler Fahrweise passierbar ist.

In einer weiteren Ausführungsform ist vorgesehen, dass wobei durch das Aktivieren der Sicherheitseinrichtung ein optisches, ein akustisches und/oder ein haptisches Warnsignal an einen Benutzer des Fahrzeugs ausgegeben, ein automatisches Abbremsen und/oder Beschleunigen des Fahrzeugs und/oder eine Lenkunterstützung (Lenkmoment) durchgeführt wird. Mithilfe des Warnsignals kann der Fahrzeugnutzer rechtzeitig auf die drohende Kollision hingewiesen werden. Hingegen bildet das automatische Abbremsen bzw. Beschleunigen des Fahrzeugs einen Eingriff in die Fahrzeugführung und damit eine aktive Abwehr der Gefahr.

In einer weiteren Ausführungsform ist vorgesehen, dass das Prognostizieren der voraussichtlichen Trajektorien der beiden Fahrzeuge unter Berücksichtigen wenigstens einer Annahme erfolgt, welche das typische Verhalten der Fahrzeugführer berücksichtigt. Dabei kann beispielsweise angenommen werden, dass das Fahrzeug stets der Fahrbahn folgt und/oder stets entlang des Fahrbahnrands fährt. Ferner kann angenommen werden, dass das Fahrzeug möglichst nahe am Fahrbahnrand der ihm zugeordneten Fahrspur fährt. Gemäß einer weiteren Annahme weicht das Fahrzeug einem Hindernis aus, welches in die ihm jeweils zugeordnete Fahrspur hineinragt. Ferner bewegt sich das Fahrzeug gemäß einer weiteren Annahme stets in einem Komfortbereich und/oder fährt mit gleichbleibender Geschwindigkeit. Die oben aufgeführten Annahmen stellen typische Verhaltensweisen von Fahrzeugsführern dar, deren Berücksichtigung bei der Prognostizierung der voraussichtlichen Trajektorien daher zu einer verbesserten Vorhersage der zukünftigen Fahrzeugbewegungen und somit auch zu einer besseren Prognose möglicher Fahrzeugkollisionen führt. Die Berücksichtigung der oben genannten Annahmen ermöglicht daher eine Reduktion sinnloser Warnungen bzw. unnötiger und unter Umständen sogar gefährlicher Eingriffe des das Fahrerassistenzsystems in de Fahrzeugführung.

In einer weiteren Ausführungsform ist vorgesehen, dass die Entscheidung, ob eine Sicherheitseinrichtung aktiviert wird, welche Sicherheitsmaßnahme aktiviert wird und/oder zu welchem Zeitpunkt die Sicherheitseinrichtung aktiviert wird in Abhängigkeit von der Geschwindigkeit des Fahrzeugs bzw. der Geschwindigkeit des Gegenverkehr-Fahrzeugs erfolgt. Hiermit kann dem Umstand Rechnung getragen werden, dass ein Fahrzeugführer bei einer geringen Fahrgeschwindigkeit eine gefährliche Verkehrssituation früher erkennen und rechtzeitig Gegenmaßnahmen durchführen kann als bei einer hohen Fahrgeschwindigkeit. So kann die Systemreaktion bei geringer Fahrgeschwindigkeit bzw. Relativgeschwindigkeit zwischen dem Fahrzeug und dem Gegenverkehr-Fahrzeug die Aktivierung der Sicherheitsmaßnahme zunächst zeitlich verzögern und gegebenenfalls ganz unterbinden, ohne das Risiko für das Auftreten einer gefährlichen Verkehrssituation zu erhöhen.

In einer weiteren Ausführungsform ist vorgesehen, dass die Aktivierung der Sicherheitseinrichtung abgebrochen wird, wenn ein entsprechender Benutzereingriff detektiert wird. Hiermit wird sichergestellt, dass der Fahrzeugführer die Kontrolle über sein Fahrzeug behält, was sich insbesondere bei automatischen Eingriffen in die Fahrzeugführung, wie z. B. Abbremsen oder Beschleunigen, in Form eines höheren Sicherheitsgefühls bemerkbar macht.

Im Folgenden wird die Erfindung anhand von Zeichnungen näher beschrieben. Dabei zeigen:
Fig. 1 schematisch ein Fahrerassistenzsystem gemäß der Erfindung;
Fig. 2 schematisch den Ablauf des erfindungsgemäßen Verfahrens;
Fig. 3 schematisch eine erste Verkehrssituation mit Gegenverkehr und einer kollisionsfrei passierbaren Engstelle;
Fig. 4 schematisch eine zweite Verkehrssituation mit Gegenverkehr und einer nicht kollisionsfrei passierbaren Engstelle;
Fig. 5 schematisch eine dritte Verkehrssituation mit Gegenverkehr und einer nicht kollisionsfrei passierbaren Engstelle aufgrund eines in die Gegenfahrspur hinragenden Hindernisses;
Fig. 6 eine vierte Verkehrssituation mit einer durch zwei beidseitig der Fahrbahn parkende erzeugten Engstelle und Gegenverkehr;
Fig. 7 eine fünfte Verkehrssituation mit einer durch beidseitig der Fahrbahn parkende Fahrzeuge erzeugten jedoch kollisionsfrei passierbaren Engstelle und Gegenverkehr; und
Fig. 8 eine sechste Verkehrssituation mit einer durch beidseitig der Fahrbahn parkende Fahrzeuge erzeugten Engstelle ohne Gegenverkehr.

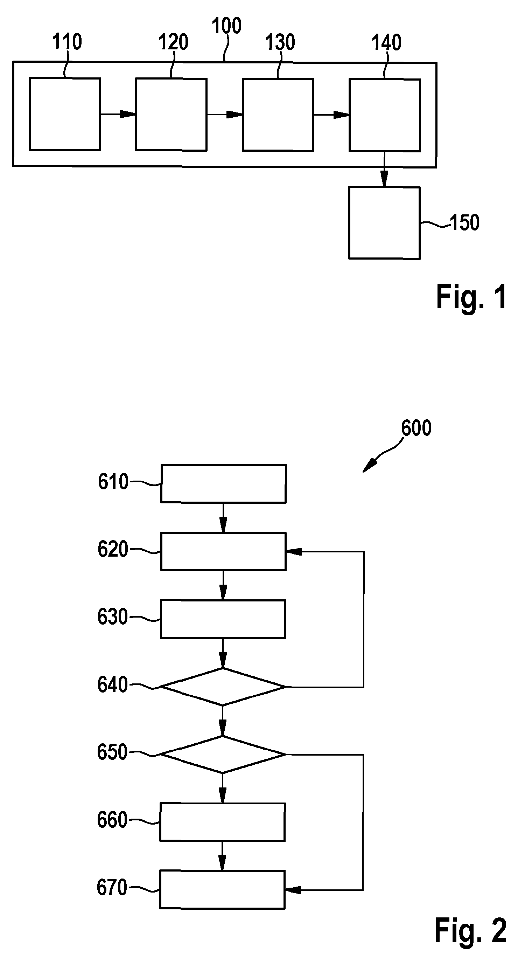

Die **Figur 1** zeigt ein erfindungsgemäßes Fahrerassistenzsystem 100 in einer schematischen Darstellung. Das Fahrerassistenzsystem 100 umfasst dabei mehrere Funktionsblöcke 110 bis 150, welche einzelne Funktionen bzw. Funktionsebenen des Fahrerassistenzsystems 100 repräsentieren. Je nach Ausgestaltung können die einzelnen Funktionen in Form separater Funktionseinheiten oder gemeinsam mit anderen Funktionen soft- und hardwaretechnisch in einer gemeinsamen Funktionseinheit integriert sein. Dabei stellt der erste Funktionsblock 110 eine Erfassungseinrichtung mit einer Umfeldsensorik zum Erfassen des Verkehrsumfelds des Fahrzeugs dar. Die Umfeldsensorik kann dabei unterschiedliche Sensor- bzw. Detektionseinrichtungen umfassen, welche zur Erfassung von Objekten in der Umgebung des Fahrzeugs 300 sowie zum Bestimmen von Eigenschaften der erfassten Objekte dienen. Dabei können verschiedene Messmethoden, wie z. B. Video, Radar, Lidar, Sonar etc. verwendet werden. Grundsätzlich kommen hierfür alles geeigneten Detektions- und Messmethoden in Frage.

Der zweite Funktionsblock 120 stellt eine Auswerteeinrichtung dar, in welcher eine Umfeldbeschreibung anhand der von der Umfeldsensorik erfassten Daten stattfindet. Hierbei werden beispielsweise der Fahrbahnverlauf, der Fahrbahnrand, Hindernisse auf der Fahrbahn, oder andere Verkehrsteilnehmer bestimmt. Dabei werden auch Distanz und Breite der durch ein oder mehrere Hindernisse erzeugten Fahrbahnengestellen sowie die Distanz, die Breite, die aktuelle Fahrgeschwindigkeit und die aktuelle Fahrtrichtung der von der Umfeldsensorik erfassten Fahrzeuge bestimmt.

Anhand dieser Informationen findet in einer durch den Funktionsblock 130 dargestellten Prädiktionseinrichtung eine Analyse der Verkehrssituation sowie eine Vorhersage zukünftiger Objektbewegungen statt. Hierzu prognostiziert die Prädiktionseinrichtung die voraussichtlichen Trajektorien des eigenen Fahrzeugs und der erfassten Gegenverkehr-Fahrzeuge und bestimmt anhand dieser voraussichtlichen Trajektorien einen voraussichtlichen Treffpunkt der Fahrzeuge.

Die so prognostizierte zukünftige Verkehrssituation wird in einer durch den Funktionsblock 140 dargestellten Steuereinrichtung bewertet und im Anschluss daran zur Planung der Systemreaktion herangezogen. Die Steuereinrichtung 140 aktiviert in Abhängigkeit von dem Bewertungsergebnis der Verkehrssituation wenigstens eine externe Sicherheitseinrichtung 150. Bei der mittels des fünften Funktionsmoduls 150 dargestellten Sicherheitseinrichtung handelt es sich beispielsweise um die Fahrzeugbremse zum direkten Eingriff in die Fahrzeugführung, einem Lenkmoment oder um einen akustischen, optischen oder haptischen Signalgeber zur Ausgabe eines Warnsignals an den Fahrzeugführer.

Das Fahrerassistenzsystem 100 ist dabei ausgebildet, den Fahrer des Fahrzeugs 200 vor einer bevorstehenden Kollision im Bereich einer Engstelle zu warnen bzw. eine automatische Bremsung durchzuführen, wenn Gegenverkehr vorhanden ist und die Engstelle nicht breit genug ist für zwei Fahrzeuge nebeneinander. Dabei weist die Prädiktionseinrichtung 130 ein Prädiktionsmodell auf, mit welchem die Bewegung des eigenen Fahrzeugs und die Bewegung des entgegenkommenden Fahrzeugs an der Engstelle möglichst realistisch vorhergesagt werden kann. Darauf aufsetzend wird mit einem in der Steuereinrichtung 140 implementierten Reaktionsmuster entschieden, ob eine Sicherheitseinrichtung aktiviert werden soll, welche Sicherheitseinrichtung aktiviert werden soll und zu welchem Zeitpunkt die Sicherheitseinrichtung aktiviert werden soll. Sowohl das Prädiktionsmodell der Prädiktionseinrichtung 130 als auch das Reaktionsmuster der Steuereinrichtung 140 sind dabei so ausgelegt, dass einerseits ein hoher Funktionsnutzen und gleichzeitig Fehlwarnungen oder falsche Bremseingriffe möglichst vermieden werden.

Das hierbei von der Erfassung des Fahrzeugsumfelds bis zu einer der jeweiligen Verkehrssituation entsprechenden Systemreaktion im Fahrerassistenzsystem 100 ablaufende Verfahren wird in der Figur 2 anhand eines vereinfachten Ablaufdiagramms 600 näher beschrieben. Dabei wird in einem ersten Schritt 610 die Umgebung des Fahrzeugs mithilfe geeigneter Methoden sensiert, um den Fahrbahnverlauf, die Fahrbahn- bzw. Fahrspurbegrenzungen sowie auf der Fahrbahn befindliche Verkehrsobjekte und Hindernisse zu erfassen. Hierfür kommen grundsätzlich verschiedene Mess-, Detektions- und Erfassungsverfahren in Frage. Beispielsweise kann die Fahrzeugumgebung mithilfe einer oder mehrerer Kameras oder anderer optischer Sensoren erfasst werden. Ferner können laser-, radar- oder schallwellengestützte Mess- und Erfassungssysteme eine hinreichend genaue Erfassung des Fahrzeugumfelds ermöglichen.

In einem zweiten Verfahrensschritt 620 erfolgt die Beschreibung des Fahrzeugumfelds, wobei die erfassten Messdaten ausgewertet und die gewünschten Informationen, wie z. B. Fahrbahnverlauf, Fahrbahnrand, auf der Fahrbahn bzw. auf den Fahrspuren befindliche Verkehrsobjekte und Hindernisse, bestimmt. Die Umfeldbeschreibung erfolgt dabei vorzugsweise mithilfe einer geeigneten Recheneinrichtung, in welcher geeignete Algorithmen zur Auswertung der Messdaten und zur Bestimmung des Fahrzeugsumfelds in Form Soft- und/oder Hardware implementiert sind. Um eine genaue Vorstellung von der aktuellen Verkehrssituation im Umfeld des Fahrzeugs zu erlangen, werden aus den Messdaten vorzugsweise möglichst viele Informationen ermittelt. Dabei werden beispielsweise neben dem Fahrbahnverlauf, den Fahrbahnbegrenzungen, der Position, der Geschwindigkeit und der Fahrtrichtung der anderen Verkehrsteilnehmer und insbesondere der Gegenverkehr-Fahrzeuge, sowie der Position von Hindernissen im Bereich der Fahrbahn möglichst auch die Breite der Gegenverkehr-Fahrzeuge sowie die Breite einer erfassten Fahrbahnengstelle ermittelt.

Anhand der bei der Umfeldbeschreibung gewonnen Daten erfolgt in einem weiteren Verfahrensschritt 630 eine Situationsanalyse, bei der die aktuelle Verkehrssituation analysiert und eine Vorhersage bzw. Prädiktion zukünftiger Objektbewegungen stattfindet. Hierbei werden die Voraussichtlichen Trajektorien (Solltrajektorien) des eigenen Fahrzeugs, der erfassten Gegenverkehr-Fahrzeuge sowie evtl. auch anderer Objekte, welche als bewegte Verkehrsobjekte im Bereich der Fahrbahn 200 identifiziert wurden, anhand der zur Verfügung stehenden Daten, wie z. B. Fahrgeschwindigkeit und Fahrtrichtung berechnet. Dabei werden auch der Fahrbahnverlauf, entsprechende Ausweichmanöver bei Hindernissen auf der eigenen Fahrspur sowie gegebenenfalls auch einige typische Verhaltensweisen der beteiligten Verkehrsteilnehmer berücksichtigt. Dies erfolgt mithilfe der Prädiktionseinrichtung bzw. des Prädiktionsmoduls, welche in Form von Soft- und/oder Hardware im Fahrerassistenzsystem 100 realisiert ist. Die Prädiktion der Soll-Trajektorien erfolgt dabei wenigstens bis zu dem Zeitpunkt, an dem das eigene Fahrzeug und das entgegenkommende Gegenverkehr-Fahrzeug sich auf gleicher Höhe befinden. Dabei definiert der anhand der Trajektorien berechnete Ort, an dem sich die Fahrzeuge auf gleicher Höhe begegnen, den voraussichtlichen Treffpunkt der beiden Fahrzeuge.

Um die zukünftige Verkehrssituation genauer vorhersagen zu können, kann die Berechnung der voraussichtlichen Trajektorien 310, 410 der Fahrzeuge 300, 400 unter Berücksichtigung der folgenden Randbedingungen erfolgen. Zum einen kann angenommen werden, dass eines oder beide Fahrzeuge 300, 400 der Fahrbahn folgen bzw. möglichst entlang des Fahrbahnrands 230, 240 entlang fahren, welcher jeweils der eigenen Fahrspur 210, 220 zugeordnet ist. Ferner kann angenommen werden, dass die Fahrzeuge 200, 300 jeweils möglichst rechts fahren. Berücksichtigt werden kann auch die Annahme, dass die Fahrzeuge 300, 400 stets Hindernissen ausweichen, welche in die dem jeweiligen Fahrzeug zugeordnete Fahrspur hineinragen. Weiterhin kann im Rahmen der Prädiktion auch angenommen werden, dass die Fahrzeuge sich möglichst im Komfortbereich, d.h., mit begrenzter Querbeschleunigung und Querruck, bewegen. Schließlich kann angenommen werden, dass die Fahrzeuge, 300, 400 mit gleichbleibender Geschwindigkeit fahren.

Vorteil dieses Verfahrens ist, dass Objektbewegungen deutlich realistischer und unter Berücksichtigung des Fahrzeugumfelds (d.h. unter Berücksichtigung von Fahrbahnbegrenzung, wie z. B. Bordsteinkante, stationärer Hindernisse, wie z. B. parkende Fahrzeuge, etc.) vorhergesagt werden können, als dies mit einem relativ einfachen geradlinigen oder kreisförmigen Bewegungsmodell möglich wäre. Solche einfache Bewegungsmodelle beschreiben lediglich geradlinige Bewegung oder Bewegung auf einer Kreisbahn mit jeweils konstanter Geschwindigkeit oder Beschleunigung. In Folge der genaueren und damit realistischeren Beschreibung der Objektbewegungen lassen sich fehlerhafte Reaktionen des Fahrassistenzsystems, wie z. B. Fehlwarnung oder gar unnötige Eingriffe in die Fahrzeugführung, deutlich reduzieren.

Die nachfolgenden Verfahrensschritte sind systematisch dem Aktionsplanungs-Funktionsmodul 140 aus Figur 1 zuzuordnen, in welchem eine Bewertung der prädiktierten Verkehrssituation im Hinblick auf das Bestehen einer Kollisionsgefahr und eine Entscheidung bzw. Planung der entsprechenden Systemreaktion erfolgt. Hierbei wird in einem Verfahrensschritt 640 zunächst ermittelt, ob der im Prädiktionsmodul 130 ermittelte voraussichtliche Treffpunkt 250 der beiden Fahrzeuge 300, 400 im Bereich bzw. auf Höhe der Fahrbahnengstelle 500 liegt. Ist dies nicht der Fall, so besteht keine Kollisionsgefahr und folglich auch keine Notwendigkeit für eine entsprechende System reaktion. In diesem Fall kann über einen Zwischenschritt 645, in welchem das Nicht-Vorliegen einer Kollisionsgefahr festgestellt wird, erneut auf die Auswertung der von der Sensorik ermittelten Daten im Verfahrensschritt 620 zurückveniviesen werden. Dies ist in der Figur 2 beispielhaft durch entsprechende, die Verfahrensschritte 640, 645, 620 verbindenden Pfeile dargestellt. Stellt das Fahrerassistenzsystem 100 im Verfahrensschritt 640 jedoch fest, dass der vorausgesagte Treffpunkt 250 der beiden Fahrzeuge 300, 400 im Bereich bzw. auf Höhe der Fahrbahnengestelle 500 liegt, besteht grundsätzlich die Gefahr, dass die beiden Fahrzeuge 300, 400 im Bereich der Fahrbahnengstelle 500 miteinander kollidieren. Dies ist insbesondere der Fall, wenn die Passierbarkeit der Fahrbahnengestelle 500 aufgrund der Breite der beiden Fahrzeuge 300, 400 nicht gewährleistet ist. Es wird daher in einem weiteren Verfahrensschritt 650 die Passierbarkeit der Fahrbahnengstelle 500 untersucht. Hierzu wird die zuvor ermittelte Breite der Fahrbahnengstelle b₃ mit der Summe aus den Breiten b₁, b₂ der beiden Fahrzeuge 300, 400 verglichen. Dabei kann eine Passierbarkeit der Fahrbahnengstelle 500 angenommen werden, wenn die Fahrbahnengstellenbreite b₃ mindestens einer Mindestbreite bₘᵢₙ entspricht, welche sich durch die Summe aus der Breite b₁ des eigenen Fahrzeugs 300, der Breite b₂ des Gegenverkehr-Fahrzeugs 400 sowie einem zusätzlichen Sicherheitsabstand bₛ entspricht. Der Sicherheitsabstand bₛ kann dabei sowohl fest vorgegeben, als auch situationsbezogen, beispielsweise von den Fahrzeuggeschwindigkeiten v₁, v₂, der Fahrbahnbreite und dem Fahrbahnverlauf stets neu bestimmt werden. Auch andere Informationen, wie z. B. der Fahrzeugtyp, können dabei berücksichtigt werden.

Ergibt die Überprüfung, dass die ermittelte Fahrbahnbreite B₃ im Bereich der Engstelle 500 die Mindestbreite bₘᵢₙ nicht unterschreitet, so stellt das System 100 in einem Zwischenschritt 645 fest, dass keine unmittelbare Kollisionsgefahr besteht und verweist wieder auf einen früheren Verfahrensschritt zurück, beispielsweise auf den Verfahrensschritt 620.

Stellt das System jedoch fest, dass die Breite der durch die Fahrbahnengstelle gebildeten Gasse b₃ die Mindestbreite bₘᵢₙ unterschreitet, so wird eine Kollision weiterhin angenommen und das Verfahren im Hinblick auf die Aktivierung der Sicherheitsfunktion weiter fortgesetzt. Zu diesem Zeitpunkt kann noch in einem Zwischenschritt 660 überprüft werden, ob das ermittelte Hindernis 510, 520, 530 auf der eigenen Fahrspur 210 liegt, bzw. der eigenen Fahrspur 210 eindeutig zuzuordnen ist. Ist dies nicht der Fall, so stellt das System 100 in einem Zwischenschritt 680 eine unmittelbare Kollisionsgefahr fest. Anschließend führt das System 100 im Verfahrensschritt 690 eine entsprechende Systemreaktion aus. Als Systemreaktion kommt insbesondere das Aktivieren eines optischen, akustischen oder haptischen Warnsignals und das Aktivieren eines Eingriffs in die Fahrzeugführung, insbesondere das Aktivieren eines automatischen Abbremsens oder Lenkens des Fahrzeugs 300 in Frage. Die Systemreaktion kann dabei vorgegeben oder auch situationsabhängig bestimmt werden. Dabei ist auch eine abgestufte Systemreaktion möglich, wobei zunächst ein Warnsignal aktiviert und zu einem späteren Zeitpunkt eine automatische Bremsung des Fahrzeugs 300 aktiviert wird.

Wird im Verfahrensschritt 660 jedoch festgestellt, dass das Hindernis 250 nicht auf der eigenen Fahrspur 210 liegt bzw. nicht eindeutig der eigenen Fahrspur 210 zuzuordnen ist, so kann das System 100 in einem Zwischenschritt 670 eine vorgegebene oder situationsabhängig bestimmbare Verzögerung der Systemreaktion durchführen. Nach Ablauf der vom System 100 vorgesehenen Verzögerungszeit kann die Systemreaktion schließlich im Verfahrensschritt 690 erfolgen. Die Systemreaktion, d.h. die Aktivierung einer Sicherheitsfunktion, wird dabei vorzugsweise lediglich unterdrückt und nicht vollständig deaktiviert.

Allerdings ist es sinnvoll, während der Verzögerung weiter zu prüfen, ob sich in der Zwischenzeit eine im Hinblick auf die Kollisionsgefahr geänderte Verkehrssituation ergeben hat. Dies kann beispielsweise durch ein Abbremsen, ein Beschleunigen oder durch ein Lenkmanöver des Gegenverkehr-Fahrzeugs 400 oder des eigenen Fahrzeugs 300 erfolgt sein. Ergibt die neue Verkehrssituation bzw. die daraus ermittelte voraussichtliche Verkehrssituation, dass keine unmittelbare Kollisionsgefahr der beiden Fahrzeuge 300, 400 im Bereich der Fahrbahnengstelle 500 mehr besteht, so kann die geplante Systemreaktion im Verfahrensschritt 690 vollständig unterdrückt werden, bis sich durch erneute Analyse der Verkehrssituation eine andere Bewertung der Kollisionsgefahr ergibt.

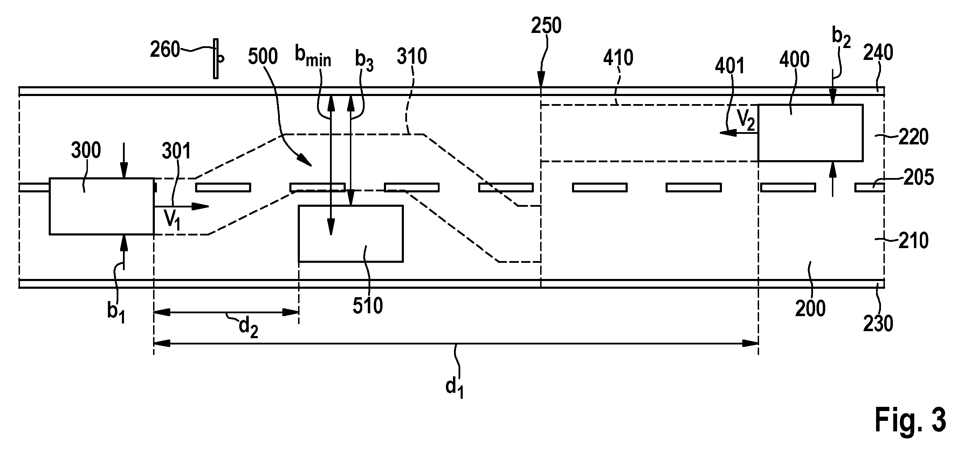

Im Folgenden wird das Verfahren anhand mehrerer typischer Verkehrssituationen beschrieben. Dabei zeigt die Figur 3 schematisch eine erste Verkehrssituation mit zwei auf einem geraden Abschnitt einer zweispurigen Fahrbahn 200 fahrenden Fahrzeugen 300, 400. Dabei handelt es sich bei dem ersten Fahrzeug 300 um das mit dem Fahrerassistenzsystem 100 ausgestattete eigene Fahrzeug (Ego-Fahrzeug) und bei dem zweiten Fahrzeug 400 um ein dem eigenen Fahrzeug 300 entgegenkommendes Gegenverkehr-Fahrzeug. Beide Fahrzeuge 300, 400 bewegen sich dabei jeweils auf einer eigenen Fahrspur 210, 220, welche im vorliegenden Beispiel mittels einer typischen unterbrochenen Mittellinie voneinander getrennt sind.

Wie in der Figur 3 dargestellt ist, befindet sich auf der Fahrspur 210 des ersten Fahrzeugs 300 ein Hindernis 510, welches die Fahrspur 210 fast vollständig blockiert. Das Hindernis 510, bei welchem es sich beispielsweise um ein auf der Fahrbahn 200 angeordnetes Objekt, eine Baustelle, eine Straßeninsel, ein stehendes Fahrzeug, ein langsam fahrendes Fahrzeug oder um ein sonstiges Hindernis handelt, führt zu einer Verengung der zum Passieren zur Verfügung stehenden Fahrbahn bzw. Gasse. Da sich das Hindernis 510 auf der eigenen Fahrspur 210 befindet, muss das eigene Fahrzeug 300 zum Passieren des Hindernisses 510 auf die Gegenfahrspur 220 ausweichen, während das Gegenverkehr-Fahrzeug 400 nahezu ungehindert am Hindernis 510 vorbeifahren kann.

Erfindungsgemäß erfasst eine Sensorik des eigenen Fahrzeugs 300 durch Scannen bzw. Messen des Verkehrsumfelds die Fahrbahn 200 inklusive den Fahrbahnbegrenzungen 230, 240 sowie eventuell vorhandenen Fahrspurmarkierungen, wie den Mittelstreifen 205, das auf der Fahrbahn 200 befindliche Hindernis 510, das Gegenverkehr-Fahrzeug 400 sowie - falls vorhanden - auch wichtige Verkehrszeichen 260. Anhand der Messdaten ermittelt das Fahrerassistenzsystem 100 anschließend die aktuelle Verkehrslage bzw. Verkehrssituation, wobei neben der Position bzw. Distanz d₂, der Fahrtgeschwindigkeit v₂, der Fahrtrichtung 401 des Gegenverkehr-Fahrzeugs 400 auch seine Breite b₂ bestimmt wird. Ferner wird auch die Position, die Distanz d₁, Breite B₃ und gegebenenfalls auch die Geschwindigkeit des Hindernisses 510 bestimmt. Bei der Bestimmung der aktuellen Verkehrssituation können auch gegebenenfalls erfasste Verkehrszeichen 260 berücksichtigt werden, um die Genauigkeit der nachfolgenden Prognose zu erhöhen. Hierzu zählen insbesondere Vorfahrtregeln, Überholverbote, Geschwindigkeitsbegrenzungen oder andere Warnzeichen, welche eine Relevanz für die Verkehrslage in einem überschaubaren Zeitraum aufweisen können.

Ausgehend von der aktuellen Verkehrslage wird anschließend mittels eines geeigneten Prädiktionsmodells die voraussichtliche Trajektorie 310 bzw. die Soll-Trajektorie des eigenen Fahrzeugs 300 für eine bestimmte Zeit vorausberechnet bzw. prädiktiert. Die Prädiktion erfolgt dabei wenigstens bis zu dem Zeitpunkt, an dem das Fahrzeug 300 das Hindernis 510 vollständig passiert hat. Parallel dazu wird auch die voraussichtliche Trajektorie bzw. Soll-Trajektorie 410 des Gegenverkehr-Fahrzeugs 400 vorausberechnet. Die Prädiktion der Trajektorien 310, 410 erfolgt vorzugsweise bis zu dem Zeitpunkt, an welchem sich die beiden Fahrzeuge 300, 400 auf gleicher Höhe begegnen, bzw. bis zu dem Zeitpunkt, an welchem die beiden Fahrzeuge 300, 400 einander passiert haben. Der Ort der Begegnung der beiden Fahrzeuge 300, 400 ergibt dabei den Treffpunkt 250, welcher in der Figur 3 mittels einer gestrichelten Linie dargestellt ist.

Die Prädiktion der Trajektorien 310, 410 erfolgt vorzugsweise unter Berücksichtigung wenigstens einer der folgenden Annahmen, welche typische Verhaltensweisen der beteiligten Verkehrsteilnehmer widerspiegeln. Zum einen kann angenommen werden, dass das jeweilige Fahrzeug 300, 400 stets der Fahrbahn 200 folgt bzw. entlang des Fahrbahnrands der jeweiligen eigenen Fahrspur 210, 220 zugeordneten Fahrbahnrands 230, 240 fährt. Ferner kann berücksichtigt werden, dass das jeweilige Fahrzeug 300, 400 möglichst nahe am Fahrbahnrand 230, 240 der ihm jeweils zugeordneten Fahrspur 210, 220 fährt. Darüber hinaus kann berücksichtigt werden, dass das jeweilige Fahrzeug 300, 400 einem Hindernis, welches in die ihm jeweils zugeordnete Fahrspur 210, 220 hineinragt, stets ausweicht. Ebenfalls berücksichtigt werden kann, dass das jeweilige Fahrzeug 300, 400 sich möglichst in einem Komfortbereich mit geringer Querbeschleunigung bewegt. Schließlich kann berücksichtigt werden, dass das jeweilige Fahrzeug 300, 400 mit jeweils gleichbleibender Fahrgeschwindigkeit v₁, v₂ fährt.

Durch Bewerten der prädiktierten zukünftigen Verkehrslage kann das Assistenzsystem 100 entscheiden, ob eine Systemreaktion erfolgen soll und gegebenenfalls, welche Systemreaktion erfolgen soll. Im vorliegenden Ausführungsbeispiel ergibt die Prädiktion, dass der voraussichtliche Treffpunkt 250 der beiden Fahrzeuge 300, 400 zu einem Zeitpunkt erfolgt, an welchem das eigene Fahrzeug 300 bereits das Hindernis 510 bereits vollständig passiert hat. In diesem Fall ist das Eingreifen des Fahrerassistenzsystems 100 nicht nötig, so dass eine entsprechende Systemreaktion unterbleiben kann.

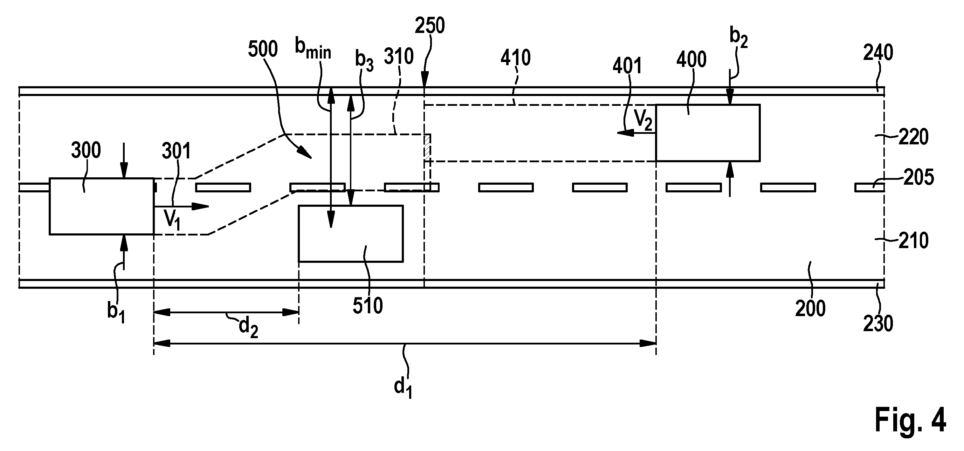

Die Figur 4 zeigt schematisch eine ähnliche Verkehrssituation, wie die in der Figur 3 gezeigte. Im Unterschied zur der oben beschriebenen Verkehrssituation ist die Distanz d₁ des Gegenverkehr-Fahrzeugs 400 zum eigenen Fahrzeug 300 jedoch geringer, so dass der durch die Prädiktion der Fahrzeugtrajektorien 310, 410 ermittelte Treffpunkt 250 sich noch im Bereich des Hindernisses 510 befindet. Anders ausgedrückt schafft es das eigene Fahrzeug 300 im Vergleich zur Verkehrssituation aus Figur 3 nicht mehr, das Hindernis 510 vollständig zu passieren, bevor es auf das Gegenverkehr-Fahrzeug 400 trifft. Da die ermittelte Breite b₃ der durch das Hindernis 510 gebildeten Engstelle 500 bzw. Fahrgasse eine Mindestbreite bₘᵢₙ unterschreitet, welche sich aus der Summe aus der Breite b₁ des eigenen Fahrzeugs, der Breite b₂ des Gegenverkehr-Fahrzeugs 400 und gegebenenfalls einem Sicherheitsabstand bₛ entspricht, ist ein kollisionsfreies Passieren der Engstelle 500 durch die beiden Fahrzeuge 300, 400 in der aktuellen Verkehrslage nicht möglich. Somit ist eine Reaktion des eigenen Fahrzeugs 300 notwendig, um die drohende Kollision mit dem Gegenverkehr-Fahrzeug 400 zu verhindern. Das Fahrerassistenzsystem 100 aktiviert daher eine geeignete Systemreaktion, welche insbesondere der Aktivierung eines optischen, akustischen und/oder haptischen Warnsignals oder dem Eingreifen in die Fahrzeugführung, wie z. B. ein Abbremsen des Fahrzeugs 300, entspricht.

Das Fahrerassistenzsystem 100 prüft vor der Aktivierung der Sicherheitseinrichtung vorzugsweise, ob sich das erfasste Hindernis 510 der eigenen Fahrspur 210 eindeutig zuordnen lässt. Ist diese Bedingung, wie vorliegend der Fall, erfüllt, so führt das Fahrerassistenzsystem 100 die geplante Systemreaktion ohne Verzögerung durch. Eine andere Einschätzung kann sich dabei ergeben, wenn die Analyse der Verkehrssituation ergibt, dass das eigene Fahrzeug 300 eine Vorfahrt genießt, was beispielsweise durch entsprechende Verkehrszeichen vorgegeben sein kann. In diesem Fall kann das Fahrerassistenzsystem die ausstehende Systemreaktion zeitlich verzögern, bis die Gefahrenstelle problemlos passiert wurde oder bis sich aufgrund einer erneuten Analyse der Verkehrssituation eine unmittelbar drohende Kollisionsgefahr ergibt.

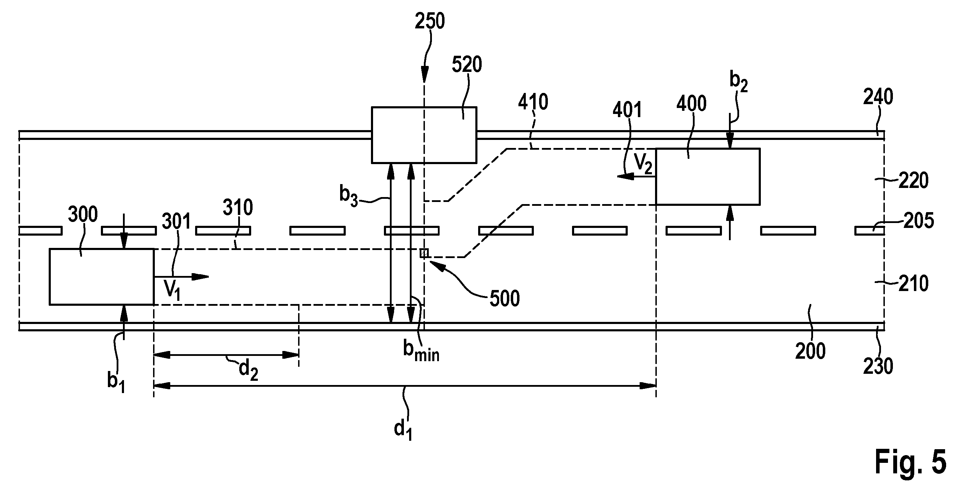

Eine entsprechende Verzögerung bzw. Unterdrückung der Systemreaktion erfolgt jedoch vorzugsweise in dem Fall, wenn sich das ermittelte Hindernis 520 nicht der eigenen Fahrspur 210 zuordnen lässt. Die Figur 5 zeigt dazu eine beispielhafte Verkehrssituation, in welcher das Hindernis 520 sich auf der Gegenfahrspur 220 befindet. Im diesem Fall stellt das Fahrerassistenzsystem 100 anhand der durch Erfassen des Verkehrsumfelds, Ermitteln der aktuellen Verkehrssituation und Prädiktieren der Trajektorien 310, 410 der Fahrzeuge 300, 400 eine bevorstehende Kollision fest, da sich der ermittelte voraussichtliche Treffpunkt 250 der beiden Fahrzeuge 300, 400 unmittelbar im Bereich der Engstelle 500 befindet und die ermittelte Breite b₃ der Fahrbahn im Bereich der Engstelle 500 geringer ist als die durch die Breite b₁ des eigenen Fahrzeug, der Breite b₂ des Gegenverkehr-Fahrzeugs 400 und dem Sicherheitsabstand bₛ gebildeten Mindestbreite bₘᵢₙ. Das Fahrerassistenzsystem 100 wird daher die Aktivierung einer entsprechenden Sicherheitsmaßnahme, wie z. B. das Ausgeben einer Warnung oder den Eingriff in die Fahrzeugführung, durchführen. Zuvor wird jedoch vorzugsweise anhand der Verkehrssituation beurteilt, ob eine Systemreaktion unmittelbar erfolgen muss, oder ob die Systemreaktion verzögert werden kann. Da im vorliegenden Beispiel das Hindernis 520 sich auf der Gegenverkehr-Fahrspur 220 befindet und daher nicht der eigenen Fahrspur 210 zuzuordnen ist, wird das Fahrerassistenzsystem die Aktivierung der vorgesehenen Sicherheitsmaßnahme zunächst verzögern, bis sich durch erneute Analyse der Verkehrssituation eine Notwendigkeit einer entsprechenden Systemreaktion ergibt. Sofern die weitere Analyse ergibt, dass eine unmittelbare Kollisionsgefahr im Bereich der Engstelle 500 nicht mehr besteht, weil beispielsweise das Gegenverkehr-Fahrzeug 400 nach Berücksichtigung einer Vorfahrtsregel eine Bremsung durchgeführt hat, kann das Fahrerassistenzsystem 100 die geplante Systemreaktion vollständig unterdrücken.

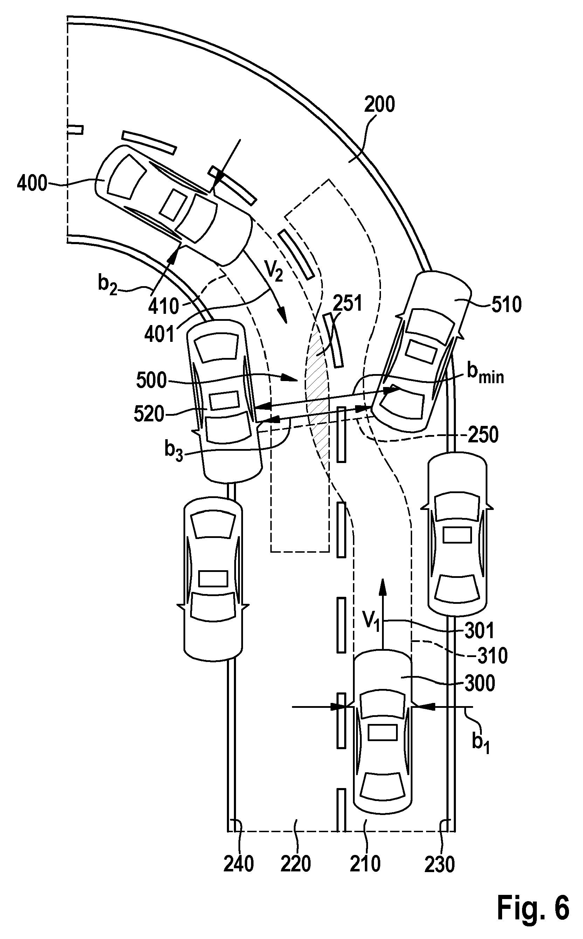

Die Figur 6 zeigt hingegen eine Verkehrssituation, bei welcher eine Fahrbahnverengung 500 durch auf beiden Fahrspuren 210, 220 befindlich Hindernisse, im vorliegenden Fall zwei parkende Fahrzeuge 510, 520, erzeugt ist. Das Fahrerassistenzsystem 100 kann nach dem Erfassen des Fahrzeugumfelds, der Bestimmung der aktuellen Fahrsituation und der Prädiktion der Trajektorien 310, 410 des eigenen Fahrzeugs 300 und des Gegenverkehr-Fahrzeugs 400 den voraussichtlichen Treffpunkt 250 der beiden Fahrzeuge 300, 400 im Bereich der Fahrbahnengstelle 500 lokalisieren. Da die ermittelte Breite b₃ der Fahrbahn im Bereich der Engstelle 500 geringer ist als die anhand der Breite b₂ des Gegenverkehr-Fahrzeugs 400, der Breite b₁ des eigenen Fahrzeugs 300 und einem zusätzlichen Sicherheitsabstand bₛ gebildeten Mindestbreite bₘᵢₙ, können die beiden Fahrzeuge 300, 400 die Fahrbahnengstelle 500 nicht kollisionsfrei passieren. Aus diesem Grund wird das Fahrerassistenzsystem 100 des Fahrzeugs 300 sich für eine Systemreaktion, d.h. für eine Aktivierung einer Sicherheitsmaßnahme, entscheiden. Zuvor wird jedoch in einem Zwischenschritt geprüft, ob die geplante Systemreaktion verzögert werden kann. Hierzu wird analysiert, ob die Fahrbahnengstelle 500 durch ein Hindernis verursacht wird, welches sich der eigenen Fahrspur 210 zuordnen lässt. Da im vorliegenden Fall die Fahrbahnengstelle 500 sowohl durch ein Hindernis 510 auf der eigenen Fahrspur 210 als auch durch ein Hindernis 520 auf der Fahrspur 220 des Gegenverkehrs verursacht wird, kann untersucht werden, in wie weit ein Ausweichen der Fahrzeuge 300, 400 auf die jeweilige Gegenfahrspur 210, 220 nötig ist. Im vorliegenden Beispiel ergibt diese Analyse, dass lediglich das eigene Fahrzeug 300 aufgrund des stark in die eigene Fahrbahn 210 hineinragenden Hindernisses 510 einen Fahrspurwechsel beim Passieren der Engstelle 500 durchführen muss. Das Gegenverkehr-Fahrzeug 400 kann hingegen die Fahrbahnengstelle 500 ohne ein entsprechendes Ausweichen auf die fremde Fahrspur 210 passieren. Daher wird das System 100 unter Berücksichtigung allgemeiner Vorfahrtsregeln die Systemreaktion unmittelbar, d.h. ohne entsprechende Verzögerung durchführen.

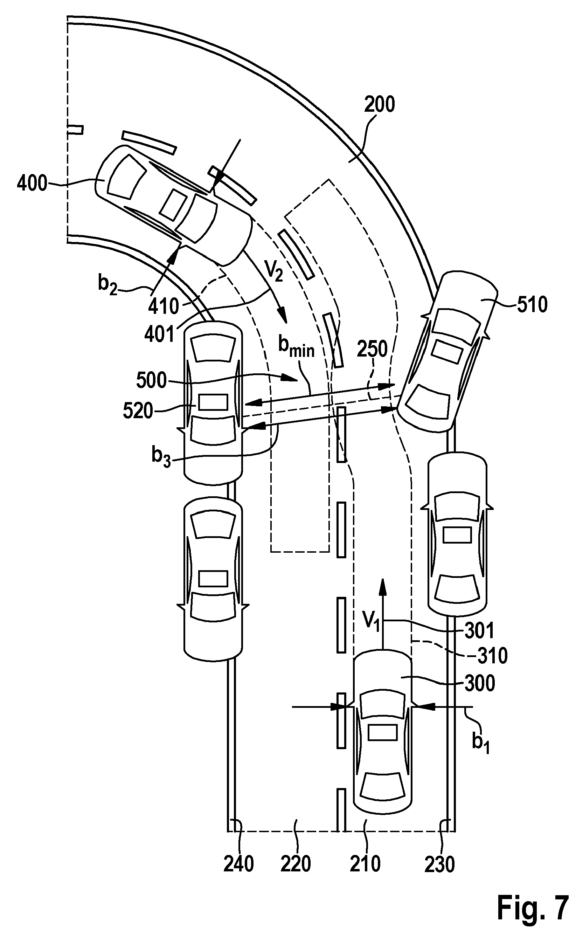

Die Figur 7 zeigt eine ähnliche Verkehrssituation zu der Verkehrssituation aus der Figur 6, wobei jedoch die Breite b₃ der Fahrbahnverengung 500 nunmehr der zum kollisionsfreien Passieren der Engstelle 500 erforderlichen Mindestbreite bₘᵢₙ entspricht. Die Prädiktion der voraussichtlichen Trajektorien 310, 410 der beiden Fahrzeuge 300, 400 ergibt folglich, dass der voraussichtliche Treffpunkt 250 der beiden Fahrzeuge 300, 400 zwar im Bereich der Fahrbahnengstelle 500 liegt, die prädiktierten Fahrzeugtrajektorien 310, 410 sich jedoch nicht berühren bzw. überschneiden. Daher wird das Fahrerassistenzsystem in diesem Fall keine entsprechende Systemreaktion, d.h. Aktivierung einer Sicherheitsfunktion, vornehmen.

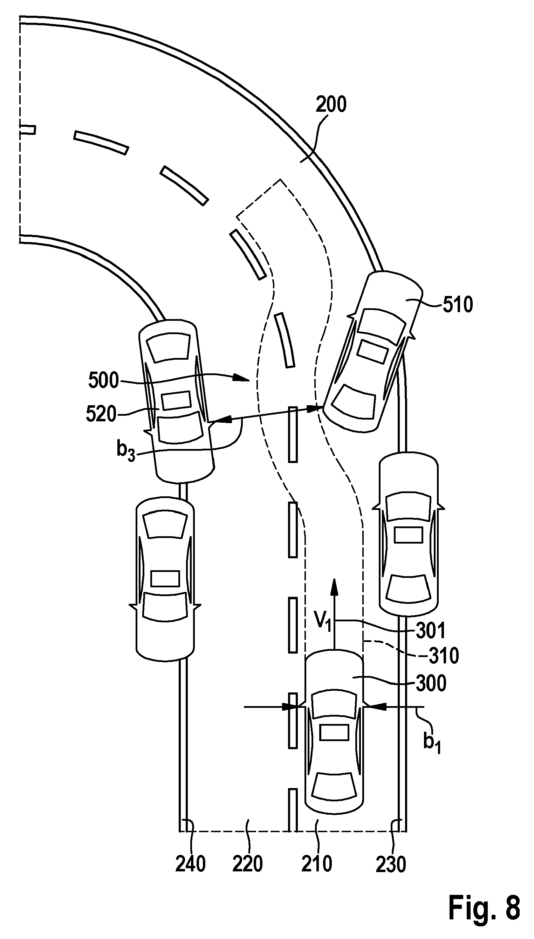

Die **Figur 8** zeigt schließlich eine weitere Abwandlung der Verkehrssituation aus der Figur 6. Dabei ist die erfasste breite b3 der Fahrbahnengstelle 500 zwar nicht breit genug, um die kollisionsfreie Passage zweier Fahrzeuge zu gewährleisten, da jedoch kein Gegenverkehr-Fahrzeug 400 auf der Gegenfahrbahn 220 detektiert wird, unterlässt das Fahrassistenzsystem 100 auch in diesem Fall eine entsprechende Systemreaktion.

Bei dem in den im Zusammenhang mit den Figuren beschriebenen Fahrerassistenzsystem handelt es sich nicht um eine Notbremsfunktion im klassischen Sinn. Vielmehr soll das Fahrerassistenzsystem dem Fahrer in schwierigen Fahrsituationen, d. h. beim Passieren von Fahrbahnengstellen, eine Lenkünterstützung geben. Dabei soll der Fahrer auch unterstützt werden, wenn er die Verkehrssituation falsch eingeschätzt hat, z. B. wenn die Engstelle enger ist als angenommen. Die Unerstützungsfunktion des Fahrerassistenzsystems steht dem Fahrer auch dann bereit, wenn das Fahrzeug auf eine unkomfortable Fahrtrajektorie gerät. Durch ein bestimmtes Lenkmoment am Lenkrad kann dem Fahrer dann ein Hinweis gegeben werden, wie er die Engstelle sicher und komfortabel passieren kann.

Unter dem Begriff "Sicherheitseinrichtung" ist in erster Linie eine Assistenzeinrichtung gemeint, welche dem Fahrer beim Erkennen einer unkomfortablen oder gefährlichen Fahr- bzw. Fahrzeugtrajektorie einen akustischen, optischen oder haptischne Hinweis gibt. Alternativ oder ergänzend hierzu kann die Assistenzeinrichtung das Fahrzeug durch einen unterstützenden Eingriff in die Längs- und Querführung des Fahrzeugs auch automatisch auf eine komfortable bzw. sichere Fahrtrajektorie führen.

Die anhand der Figuren erläuterten Ausführungsformen stellen lediglich bevorzugte beziehungsweise beispielhafte Ausgestaltungen der Erfindung dar. Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Verfahren zum Betreiben eines Fahrerassistenzsystems (100) für ein auf einer Fahrbahn (300) fahrendes Fahrzeug (300) umfassend die Schritte:
- Erfassen einer vor dem Fahrzeug (300) liegenden Fahrbahnengstelle (500) sowie wenigstens eines dem Fahrzeug (300) entgegen kommenden Gegenverkehr-Fahrzeugs (400),
- Bestimmen der Distanz (d₂) und der Breite (b₃) der Fahrbahnengstelle (500) sowie der Distanz (d₁), der Breite (b2) und der aktuellen Fahrgeschwindigkeit (v₂) des Gegenverkehr-Fahrzeugs (400),
- Prognostizieren der voraussichtlichen Trajektorien (310, 410) des Fahrzeugs (300) und des Gegenverkehr-Fahrzeugs (400) und Bestimmen eines voraussichtlichen Treffpunkts (250) der beiden Fahrzeuge (300, 400),
- Bewerten der prognostizierten Verkehrsituation, und
- Aktivieren einer Sicherheitseinrichtung (150), wenn der voraussichtliche Treffpunkt (250) der beiden Fahrzeuge (300, 400) im Bereich der Engstelle (500) liegt,
wobei der Zeitpunkt der Aktivierung der Sicherheitseinrichtung (150) in Abhängigkeit von der aktuellen Verkehrssituation bestimmt wird.

2. Verfahren nach Anspruch 1,
wobei die Aktivierung der Sicherheitseinrichtung (150) zeitlich verzögert wird, wenn die Engstelle (500) durch ein Hindernis (520) auf einer dem Gegenverkehr-Fahrzeug (400) zugeordneten Fahrspur (220) bedingt ist.

3. Verfahren nach Anspruch 1 oder 2,
wobei die Aktivierung der Sicherheitseinrichtung (150) zeitlich verzögert wird, wenn die Engstelle (500) durch ein Hindernis (530) bedingt ist, welches weder einer Fahrspur (210) des Fahrzeugs (300) noch einer Fahrspur (220) des Gegenverkehr-Fahrzeugs (400) eindeutig zugeordnet werden kann.

4. Verfahren nach einem der Ansprüche 1 bis 3,
wobei die Sicherheitseinrichtung (150) unverzüglich aktiviert wird, wenn die Engstelle (500) durch ein Hindernis (510) auf einer dem Fahrzeug (300) zugeordneten Fahrspur (210) bedingt ist.

5. Verfahren nach einem er vorhergehenden Ansprüche,
wobei die Aktivierung der Sicherheitseinrichtung (150) nicht erfolgt, wenn die ermittelte Fahrbahnbreite (b₃) im Bereich der Verengung (500) eine Mindestbreite (bₘᵢₙ) überschreitet, welche durch die Summe der Breiten (b₁, b₂) der beiden Fahrzeuge (300, 400) und einem zusätzlichen Sicherheitsabstand (bₛ) bestimmt wird.

6. Verfahren nach einem der vorhergehenden Ansprüche,
wobei die Sicherheitseinrichtung (150) aktiviert wird, um ein optisches, ein akustisches und/oder ein haptisches Warnsignal an einen Benutzer des Fahrzeugs (300) auszugeben, ein automatisches Abbremsen und/oder Beschleunigen des Fahrzeugs (300) und/oder eine Lenkunterstützung durchzuführen.

7. Verfahren nach einem der vorhergehenden Ansprüche,
wobei zum Prognostizieren der voraussichtlichen Trajektorie (310, 410) wenigstens eines der beiden Fahrzeuge (300, 400) ein Prädiktionsmodell verwendet wird, welches wenigstens einer der folgenden Annahmen berücksichtigt:
- das jeweilige Fahrzeug (300, 400) folgt der Fahrbahn (200) und/oder fährt entlang des Fahrbahnrands (230, 240),
- das jeweilige Fahrzeug (300, 400) fährt möglichst nahe am Fahrbahnrand (230, 240) der ihm jeweils zugeordneten Fahrspur (210, 220),
- das jeweilige Fahrzeug (300, 400) weicht einem Hindernis (510, 520) aus, welches in die ihm jeweils zugeordneten Fahrspur (210, 220) hinein ragt,
- das jeweilige Fahrzeug (300, 400) bewegt sich in einem Komfortbereich, und
- das jeweilige Fahrzeug (300, 400) fährt mit gleichbleibender Fahrgeschwindigkeit (v₁, v₂).

8. Verfahren nach einem der vorhergehenden Ansprüche,
wobei die Entscheidung, ob die Sicherheitseinrichtung (150) aktiviert wird, welche Sicherheitseinrichtung (150) aktiviert wird und/oder zu welchem Zeitpunkt die Sicherheitseinrichtung (150) aktiviert wird in Abhängigkeit von der Geschwindigkeit (v₁) des Fahrzeugs (300) und/oder der Geschwindigkeit (v₂) des Gegenverkehr-Fahrzeugs (400) erfolgt.

9. Verfahren nach einem der vorhergehenden Ansprüche,
wobei die Aktivierung der Sicherheitseinrichtung (150) abgebrochen wird, wenn ein entsprechender Benutzereingriff detektiert wird.

10. Fahrerassistenzsystem (100) für ein auf einer Fahrbahn (200) fahrendes Fahrzeug (300) umfassend:
- eine Erfassungseinrichtung (110) zur Erfassung einer auf vor dem Fahrzeug (300) liegenden Engstelle (500) der Fahrbahn (200) sowie wenigstens eines dem Fahrzeug (300) entgegen kommenden Gegenverkehr-Fahrzeugs (400),
- eine Auswerteeinrichtung (120) zur Bestimmung der Distanz (d₂) und der Breite (b₃) der Fahrbahnengstelle (500) sowie der Distanz (d₁), der Breite (b2) und der aktuellen Fahrgeschwindigkeit (v₂) des Gegenverkehr-Fahrzeugs (400),
- eine Prädiktionseinrichtung (130) zum Prognostizieren jeweils einer voraussichtlichen Trajektorie (310, 410) für das Fahrzeug (300) und das Gegenverkehr-Fahrzeug (400) sowie zum Bestimmen eines voraussichtlichen Treffpunktes (250) der beiden Fahrzeuge (300, 400),
- eine Steuereinrichtung (140) zum Bewerten der prognostizierten Verkehrssituation und zum Aktivieren einer Sicherheitseinrichtung (150) in dem Fall, dass der voraussichtliche Treffpunkt (250) der beiden Fahrzeuge (300, 400) im Bereich der Engstelle (500) liegt,
wobei die Steuereinrichtung (140) ausgebildet ist, den Zeitpunkt der Aktivierung der Sicherheitseinrichtung (150) in Abhängigkeit von der aktuellen Verkehrssituation zu bestimmen.

## Claims

1. Method for operating a driver assistance system (100) for a vehicle (300) driving on a carriageway (300), comprising the steps:
- detecting a carriageway constriction (500) lying ahead of the vehicle (300), as well as at least one vehicle (400) in the oncoming traffic with respect to the vehicle (300),
- determining the distance (d₂) and the width (b₃) of the carriageway constriction (500) and of the distance (d₁), the width (b₂) and the current velocity (v₂) of the vehicle (400) in the oncoming traffic,
- predicting the anticipated trajectories (310, 410) of the vehicle (300) and of the vehicle (400) in the oncoming traffic, and determining an anticipated intersection point (250) of the two vehicles (300, 400),
- assessing the predicted traffic situation, and
- activating a safety device (150) if the anticipated intersection point (250) of the two vehicles (300, 400) lies in the region of the constriction (500),
wherein the time of activation of the safety device (150) is determined as a function of the current traffic situation.

2. Method according to Claim 1,
wherein the activation of the safety device (150) is delayed if the constriction (500) is caused by an obstacle (520) on a lane (220) assigned to the vehicle (400) in the oncoming traffic.

3. Method according to Claim 1 or 2,
wherein the activation of the safety device (150) is delayed if the constriction (500) is caused by an obstacle (530) which cannot be assigned in a clearly defined fashion either to a lane (210) of the vehicle (300) or to a lane (220) of the vehicle (400) in the oncoming traffic.

4. Method according to one of Claims 1 to 3,
wherein the safety device (150) is activated without delay if the constriction (500) is caused by an obstacle (510) on a lane (210) which is assigned to the vehicle (300).

5. Method according to one of the preceding claims,
wherein the safety device (150) is not activated if the determined carriageway width (b₃) in the region of the constriction (500) exceeds a minimum width (bₘᵢₙ) which is determined by the sum of the widths (b₁, b₂) of the two vehicles (300, 400) and an additional safety distance (bₛ).

6. Method according to one of the preceding claims,
wherein the safety device (150) is activated in order to output a visual, audible and/or haptic warning signal to a user of the vehicle (300), and to carry out automatic braking and/or acceleration of the vehicle (300) and/or steering assistance.

7. Method according to one of the preceding claims,
wherein in order to predict the anticipated trajectory (310, 410) of at least one of the two vehicles (300, 400), a prediction model is used which takes into account at least one of the following assumptions:
- the respective vehicle (300, 400) follows the carriageway (200) and/or drives along the edge (230, 240) of the carriageway,
- the respective vehicle (300, 400) drives as close as possible to the edge (230, 240) of the carriageway of the lane (210, 220) which is respectively assigned to it,
- the respective vehicle (300, 400) avoids an obstacle (510, 520) which projects into the lane (210, 220) respectively assigned to it,
- the respective vehicle (300, 400) moves in a comfort region, and
- the respective vehicle (300, 400) travels at a constant velocity (v₁, v₂).

8. Method according to one of the preceding claims,
wherein the decision as to whether the safety device (150) is activated, as to which safety device (150) is activated and/or as to the time at which the safety device (150) is activated is taken as a function of the velocity (v₁) of the vehicle (300) and/or of the velocity (v₂) of the vehicle (400) in the oncoming traffic.

9. Method according to one of the preceding claims,
wherein the activation of the safety device (150) is cancelled if a corresponding user intervention is detected.

10. Driver assistance system (100) for a vehicle (300) driving on a carriageway (200), comprising:
- a detection device (110) for detecting a constriction (500) in the carriageway (200) lying ahead of the vehicle (300), as well as at least one vehicle (400) in the oncoming traffic with respect to the vehicle (300),
- an evaluation device (120) for determining the distance (d₂) and the width (b₃) of the carriageway constriction (500) and of the distance (d₁), the width (b₂) and the current velocity (v₂) of the vehicle (400) in the oncoming traffic,
- a prediction device (130) for predicting in each case an anticipated trajectory (310, 410) for the vehicle (300) and the vehicle (400) in the oncoming traffic as well as for determining an anticipated intersection point (250) of the two vehicles (300, 400),
- a control device (140) for evaluating the predicted traffic situation and for activating a safety device (150) in the event of the anticipated intersection point (250) of the two vehicles (300, 400) lying in the region of the constriction (500),
wherein the control device (140) is designed to determine the time of activation of the safety device (150) as a function of the current traffic situation.

## Revendications

1. Procédé de mise en fonctionnement d'un système d'aide à la conduite (100) destiné à un véhicule (300) se déplaçant sur une route (300), comprenant les étapes consistant à :
- détecter un point de rétrécissement de route (500) situé à l'avant du véhicule (300) ainsi qu'un véhicule circulant en sens inverse (400) se déplaçant vers le véhicule (300),
- déterminer la distance (d₂) et la largeur (b₃) du rétrécissement de route (500) ainsi que la distance (d₁), la largeur (b₂) et la vitesse de déplacement actuelle (v₂) du véhicule circulant en sens inverse (400),
- prédire les trajectoires prévisibles (310, 410) du véhicule (300) et du véhicule circulant en sens inverse (400) et déterminer un point de rencontre (250) prévisible des deux véhicules (300, 400),
- évaluer la situation de circulation pronostiquée, et
- activer un dispositif de sécurité (150) lorsque le point de rencontre prévisible (250) des deux véhicules (300, 400) se situe dans la région du rétrécissement (500),
dans lequel l'instant d'activation du dispositif de sécurité (150) est déterminé en fonction de la situation de circulation actuelle.

2. Procédé selon la revendication 1,
dans lequel l'activation du dispositif de sécurité (150) est retardée dans le temps lorsque le point de rétrécissement (500) est dû à un obstacle (520) sur une voie de circulation (220) associée au véhicule circulant en sens inverse (400).

3. Procédé selon la revendication 1 ou 2,
dans lequel l'activation du dispositif de sécurité (150) est retardée dans le temps lorsque le point de rétrécissement (500) est dû à un obstacle (530) qui est associé de manière unique soit à une voie de circulation (210) du véhicule (300), soit à une voie de circulation (220) du véhicule circulant en sens inverse (400).

4. Procédé selon l'une quelconque des revendications 1 à 3,
dans lequel le dispositif de sécurité (150) est activé sans délai lorsque le point de rétrécissement (500) est dû à un obstacle (510) sur une voie de circulation (210) associée au véhicule (300).

5. Procédé selon l'une quelconque des revendications précédentes,
dans lequel l'activation du dispositif de sécurité (150) n'est pas effectuée lorsque la largeur de route (b₃) déterminée dépasse une largeur minimale (bₘᵢₙ) dans la région du rétrécissement (500), qui est déterminée comme étant la somme des largeurs (b₁, b₂) des deux véhicules (300, 400) et d'une distance de sécurité supplémentaire (bₛ).

6. Procédé selon l'une quelconque des revendications précédentes,
dans lequel le dispositif de sécurité (150) est activé afin de délivrer un signal d'alarme optique, acoustique et/ou haptique à un utilisateur du véhicule (300), pour effectuer automatiquement un freinage et/ou une accélération du véhicule (300), et/ou une assistance au braquage.

7. Procédé selon l'une quelconque des revendications précédentes,
dans lequel, pour pronostiquer la trajectoire prévisible (310, 410) d'au moins l'un des deux véhicules (300, 400), on utilise un modèle de prédiction qui tient compte d'au moins l'une des hypothèses suivantes :
- le véhicule respectif (300, 400) suit la route (200) et/ou se déplace le long du bord de route (230, 240),
- le véhicule respectif (300, 400) se déplace le plus près possible du bord de route (230, 240) de la voie de circulation (210, 220) qui lui est associée,
- le véhicule respectif (300, 400) s'écarte d'un obstacle (510, 520) qui fait saillie à l'intérieur de la voie de circulation (210, 220) qui lui est respectivement associée,
- le véhicule respectif (300, 400) est en mouvement dans une zone de confort, et
- le véhicule respectif (300, 400) se déplace à une vitesse de déplacement constante (v₁, v₂).

8. Procédé selon l'une quelconque des revendications précédentes,
dans lequel la décision de savoir si le dispositif de sécurité (150) est activé, quel dispositif de sécurité (150) est activé et/ou à quel instant le dispositif de sécurité (150) est activé est prise en fonction de la vitesse (v₁) du véhicule (300) et/ou de la vitesse (v₂) du véhicule circulant en sens inverse (400).

9. Procédé selon l'une quelconque des revendications précédentes,
dans lequel l'activation du dispositif de sécurité (150) est interrompue lorsqu'une intervention correspondante de l'utilisateur est détectée.

10. Système d'aide à la conduite (100) destiné à un véhicule (300) se déplaçant sur une route (200), comprenant :
- un dispositif de détection (110) destiné à détection un point de rétrécissement (500) situé à l'avant du véhicule (300) sur la route (200) ainsi qu'un véhicule circulant en sens inverse (400) se déplaçant vers le véhicule (300),
- un dispositif d'évaluation (120) destiné à déterminer la distance (d₂) et la largeur (b₃) du rétrécissement de route (500) ainsi que la distance (d₁), la largeur (b₂) et la vitesse de déplacement actuelle (v₂) du véhicule circulant en sens inverse (400),
- un dispositif de prédiction (130) destiné à pronostiquer respectivement une trajectoire prévisible (310, 410) du véhicule (300) et du véhicule circulant en sens inverse (400) et à déterminer un point de rencontre (250) prévisible des deux véhicules (300, 400),
- un dispositif de commande (140) destiné à évaluer la situation de circulation pronostiquée et à activer un dispositif de sécurité (150) lorsque le point de rencontre prévisible (250) des deux véhicules (300, 400) se situe dans la région du rétrécissement (500),
dans lequel le dispositif de commande (140) est conçu pour déterminer l'instant de l'activation du dispositif de sécurité (150) en fonction de la situation de circulation actuelle.
